# EUROPÄISCHE PATENTSCHRIFT

(11) **EP 1 830 586 B1**
(45) Veröffentlichungstag und Bekanntmachung des Hinweises auf die Patenterteilung: **03.02.2010**
(21) Anmeldenummer: 07090114.5
(22) Anmeldetag: 10.02.2004
(51) Int. Cl.: H04Q 3/00, H04M 3/42, H04W 8/28

(54) **Verfahren und Mobilfunk-Endgerät zur Bereitstellung einer Telekommunikationsverbindung zwischen zwei Endgeräten**
Method and mobile terminal for providing a telecommunications connection between two terminals
Procédé et terminal mobile pour établir une connexion de télécommunication entre deux terminaux

(30) Priorität: 13.02.2003 DE 10306540
(43) Veröffentlichungstag der Anmeldung: 05.09.2007
(62) Teilanmeldung aus: 04709577.3
(73) Patentinhaber: Teles AG Informationstechnologien, 10587 Berlin (DE)
(72) Erfinder: Paetsch, Frank, 12357 Berlin (DE)
(74) Vertreter: Müller, Wolfram Hubertus

(56) Entgegenhaltungen:
- EP-A- 1 051 052
- US-A- 6 064 887
- LAUTENSCHLAGER W ET AL: "ROUTING SERVICE FOR THE PROVISION OF NUMBER PORTABILITY" PROCEEDINGS OF THE ISS'97 INTERNATIONAL SWITCHING SYMPOSIUM, TORONTO, ONTARIO, CANADA, Bd. 2, 21. September 1997 (1997-09-21), Seiten 235-242, XP000704473

## Beschreibung

Die Erfindung betrifft ein Verfahren zur Bereitstellung einer Telekommunikationsverbindung zwischen einem ersten, rufenden Endgerät und einem zweiten, gerufenen Endgerät gemäß dem Oberbegriff das Anspruchs 1 und ein Telekommunikationsgerät zur Verwendung in einem solchen Verfahren.

### Hintergrund der Erfindung

Mit dem Begriff "Number Portability" wird eine Funktionalität beschrieben, die es einem Telekommunikationsteilnehmer erlaubt, "seine" Rufnummer bei einem Netzbetreiberwechsel mitzunehmen. Hatte der Teilnehmer beispielsweise bisher einen Mobilfunkvertrag mit der Deutsche Telekom AG, so begann seine Mobilfunknummer mit der Einwählnummer 0171, gefolgt von der eigenen Rufnummer XXXXXXXX, so dass die Mobilfunknummer lautete: 0171XXXXXXXX. Bei einem Wechsel zu einem anderen Netzbereiber, beispielsweise E-Plus, musste bisher eine völlig neue Nummer vergeben werden. "Number Portability" erlaubt es, die bisherige Nummer mitzunehmen. Dabei bleibt neben der eigentlichen Nummer XXXXXXXX auch die Vorwahl (im obigen Beispiel: 0171) erhalten.

Der Verbindungsaufbau zu einem Mobilfunkgerät mit solchen "portierten" Rufnummer verläuft aufgrund der unveränderten Vorwahl (0171) zunächst über den alten Netzbetreibers. Im Netz des alten Netzbereibers wird dann festgestellt, dass die gerufene Nummer inzwischen zu einem neuen Netz (im obigen Beispiel: dem Netz des Netzbetreibers E-Plus) gehört. Der Ruf wird dann vom Netz des alten Netzbetreibers an das Netz des neuen Netzbetreibers weitergeleitet.

Hierbei ergeben sich jedoch für den rufenden Teilnehmer bei Gesprächen zu portierten Rufnummern nicht mehr transparente und in der Regel auch erhöhte Verbindungsgebühren.

Insbesondere kann der alte Netzbetreiber zusätzliche Gebühren für das Weiterleiten des Gesprächs an das Netz des neuen Netzbetreibers verlangen.

Aus der Publikation "ROUTING SERVICE FOR THE PROVISION OF NUMBER PORTABILITY", Lautensclager W et al, PROCEEDINGS OF THE ISS'97 INTERNATIONAL SWITCHING SYMPOSIUM, Toronto, Kanada, 21-26 September 1997, Seiten 235-242 (Bd. 2), Abschnitt 4.3.3, ist schon ein Verfahren gemäß dem Oberbegriff des Anspruchs 1 bekannt.

### Aufgabe der Erfindung

Der vorliegenden Erfindung liegt die Aufgabe zu Grunde, ein Verfahren und ein Telekommunikationsgerät zur Bereitstellung einer Telekommunikationsverbindung zwischen einem rufenden Endgerät und einem gerufenen Endgerät zur Verfügung zu stellen, wobei das gerufene Endgerät eine portierte Rufnummer besitzt, die eine kostengünstige und für den Nutzer kostenmäßig transparente Telekommunikationsverbindung ermöglichen.

### Zusammenfassung der Erfindung

Diese Aufgabe wird erfindungsgemäß durch ein Verfahren mit den Merkmalen des Anspruchs 1 und ein Mobilfunk-Endgerät mit den Merkmalen des Anspruchs 8 gelöst. Bevorzugte und vorteilhafte Ausgestaltungen der Erfindung sind in den Unteransprüchen angegeben.

Bei dem erfindungsgemäßen Verfahren erfolgt die Bereitstellung einer Datenbank, in der eine Vielzahl von portierten Rufnummern mit den dazugehörigen aktuellen Telekommunikationsnetzen bzw. deren Einwählnummern gespeichert ist. Vor oder während des Rufaufbaus wird anhand der Datenbank geprüft wird, ob es sich bei der Rufnummer des gerufenen Endgeräts um eine portierte Rufnummer handelt. Für diesen Fall wird das aktuelle Telekommunikationsnetz des gerufenen Endgeräts bestimmt und die Verbindung dann direkt über das aktuelle Telekommunikationsnetz des gerufenen Endgeräts zu diesem terminiert. Erfindungsgemäß ist die Datenbank in ein rufendes Mobilfunk-Endgerät integriert, das über mit einer Kennung versehenen Einsteckkarten, insbesondere SIM-Karten Zugang zu mindestens zwei Telekommunikationsnetzen besitzt, wobei das rufende Mobilfunk-Endgerät vor einem Verbindungsaufbau anhand der eigenen Datenbank prüft, ob es sich bei der Rufnummer des gerufenen Endgeräts um eine portierte Rufnummer handelt, für diesen Fall das aktuelle Telekommunikationsnetz des gerufenen Endgeräts bestimmt und einen Verbindungsaufbau unter Verwendung der Einsteckkarte vornimmt, die dem aktuellen Telekommunikationsnetz des gerufenen Endgeräts zugeordnet ist.

Steht eine solche Einsteckkarte nicht zur Verfügung, kann zumindest die Tatsache angezeigt werden, dass der Ruf zu einer portieren Rufnummer erfolgen soll, und können beispielsweis zusätzlich die zu erwartenden Kosten angezeigt werden. Der Nutzer kann dann entscheiden, ob er den Verbindungsaufbau wieder abbricht. Alternativ kann die Verbindung zum portierten Teilnehmer unter Zwischenschaltung eines weiteren, kostengünstigen Netzes erfolgen. Beispielsweise kann eine Calling Card Platform mit DTMF Nachwahl angewählt werden.

Unter einem "direkten" Terminieren der Verbindung über das aktuelle Telekommunikationsnetz wird dabei verstanden, dass die Verbindung ohne Zwischenschaltung des Netzes, dem die Rufnummer des gerufenen Endgeräts aufgrund ihrer Vorwahl zugeordnet ist, terminiert wird. Es kann dabei durchaus der Fall vorliegen, dass weitere Netze anderer Anbieter noch zwischengeschaltet wird, etwa die Netze ausländischer Anbieter, an die der Ruf weitergeleitet wird, wenn der gerufene Teilnehmer sich im Ausland befindet. Auch kann der Fall vorliegen, dass der Ruf nicht unmittelbar zu dem aktuellen Mobilfunknetz geleitet wird, sondern zunächst an ein zwischengeschaltetes Netz eines dritten Netzbetreibers, etwa weil kein direkter Nutzkanal zu dem aktuellen Netz bereitsteht.

Ein "direktes" Terminieren im Sinne der Erfindung bedeutet lediglich, dass jedenfalls das Netz, dem die Rufnummer des gerufenen Endgeräts aufgrund ihrer Vorwahl zugeordnet ist, anders als beim Stand der Technik an der Verbindung nicht beteiligt ist.

Die erfindungsgemäße Lösung ermöglicht das Leiten eines Rufes direkt auf das Zielnetz einer portierten Rufnummer. Der Ruf wird also nicht zuerst in das Netz geleitet, dem die Rufnummer aufgrund ihrer Vorwahl zugeordnet ist, sondern direkt in das eigentliche Zielnetz des aktuellen Netzbetreibers des gerufenen Endgeräts. Dabei wird der kostengünstigste Weg zum gerufenen Endgerät ausgewählt.

Die Erfindung ermöglicht aufgrund der Reduzierung der an der Verbindung beteiligten Netze eine Vereinfachung und bessere Kostentransparenz und kann insbesondere zu einer erheblichen Kostenreduktion führen. So liegen die Kosten eines Rufes im gleichen Netz bei den meisten Netzbetreibern höher als die Kosten des Rufs zu einer portierten Nummer.

In einer bevorzugten Ausgestaltung der Erfindung wird vor einem Terminieren der Verbindung dem rufenden Endgerät signalisiert, dass die Rufnummer des gerufenen Endgeräts eine portierte Rufnummer ist. Bevorzugt werden dem rufenden Endgerät dabei weitere Zusatzinformationen mitgeteilt, insbesondere der Kostentarif der zu dem gerufenen Endgerät aufzubauenden Verbindung. Der rufende Teilnehmer hat somit die Möglichkeit, den Ruf etwa wegen zu hoher Kosten doch nicht aufzubauen und wieder aufzulegen. Letzteres kann insbesondere dann sinnvoll sein, wenn die Kapazitäten für eine erfindungsgemäße, kostengünstige Teminierung des Rufes ausgelastet sind.

In einer alternativen Ausgestaltung wird im Falle der Feststellung, dass die Rufnummer des gerufenen Endgeräts eine portierte Rufnummer ist, der Verbindungsaufbau automatisch abgebrochen. Diese Variante ist dann sinnvoll, wenn eine Terminierung direkt über das aktuelle Netz des gerufenen Endgeräts aus bestimmten Gründen zeitweise oder grundsätzlich nicht möglich ist, etwa weil keine Verbindungen zu dem aktellen Netz bereitstehen.

Bevorzugt wird die Datenbank fortlaufend manuell oder automatisch aktualisiert. So kann die Datenbank manuell oder automatisch (z.B. zeitgesteuert) aktiv durch das Mobilfunk-Endgerät von einem Server heruntergeladen werden. Auch kann ein Server-System manuell oder automatisch die Datenbank auf das Mobilfunk-Endgerät laden (aktives und passives Laden der Datenbank). Das Laden kann über beliebige Datenanbindungen wie zum Beispiel GPRS, UMTS, IP-Verbindung, ISDN-Verbindung, SMS und xDSL-Verbindung erfolgen.

Es wird an dieser Stelle darauf hingewiesen, dass unter einer "Datenbank" im Sinne der vorliegenden Erfindung jede Sammlung portierter Rufnummern verstanden wird. Insbesondere kann es sich sowohl um eine relationale Datenbank als auch einen wesentlich einfacheren Aufbau wie etwa in einer Datei vorsortierte Felder handeln.

Es kann vorgesehen sein, dass die Datenbank lediglich besonders häufig verwendete portierte Rufnummern enthält. Beispielsweise enhält die in einem Mobilfunk-Gateway realisierte Datenbank nur die tausend am häfigsten verwendeten portierten Rufnummern.

Das erfindungsgemäße Mobilfunk-Endgerät umfasst:
- eine Datenbank, in der eine Vielzahl von portierten Rufnummern mit den dazugehörigen aktuellen Telekommunikationsnetzen bzw. deren Einwählnummern gespeichert ist,
- Mittel, die anhand der Datenbank prüfen, ob es sich bei der Rufnummer eines gerufenen Endgeräts um eine portierte Rufnummer handelt und für diesen Fall das aktuelle Telekommunikationsnetz des gerufenen Endgeräts bzw. dessen Einwahlnummer bestimmen, und
- Mittel zur Herstellung einer Verbindung zu einem gerufenen Endgerät direkt über das aktuelle Telekommunikationsnetz, wobei
- das Mobilfunk-Endgerät über mindestens zwei mit einer Kennung versehenen Einsteckkarten, insbesondere SIM-Karten, Zugang zu mindestens zwei Telekommunikationsnetzen besitzt, und die Mittel zur Herstellung einer Verbindung zu einem gerufenen Endgerät diejenige Einsteckkarte für einen Verbindungsaufbau auswählen, die dem Mobilfunknetz zugeordnet ist, dem ausweislich der Informationen der Datenbank auch das gerufene Endgerät aktuell zugeordnet ist.

Bevorzugt sind im Mobilfunk-Endgerät des weiteren Mittel vorgesehen, die dem Nutzer die Tatsache, dass ein Ruf zu einer portierten Rufnummer aufgebaut werden soll, sowie ggf. Zusatzinformationen auf dem Display des Mobilfunk-Endgeräts anzeigen.

### Beschreibung mehrerer Ausführungsbeispiele

Die Erfindung wird nachfolgend unter Bezugnahme auf die Figuren der Zeichnung anhand mehrerer Ausführungsbeispiele näher erläutert. Es zeigen:
- Figur 1 -: eine Telekommunikationsanordnung mit einem Telekommmunikations-Festnetz und einem daran angeschlossenen Mobilfunk-Gateway;
- Figur 2 -: schematisch den Aufbau eines Mobilfunk-Gateways gemäß Figur 1;
- Figur 3 -: schematisch den Aufbau einer Einsteckkarte eines Gateways gemäß Figur 2;
- Figur 4 -: die Ober- und Unterseite eines SIM-Karteneinschubs einer Einsteckkarte gemäß Figur 3 und
- Figur 5 -: schematisch ein funktionelles Blockschaltbild eines Mobilfunk-Gateways.

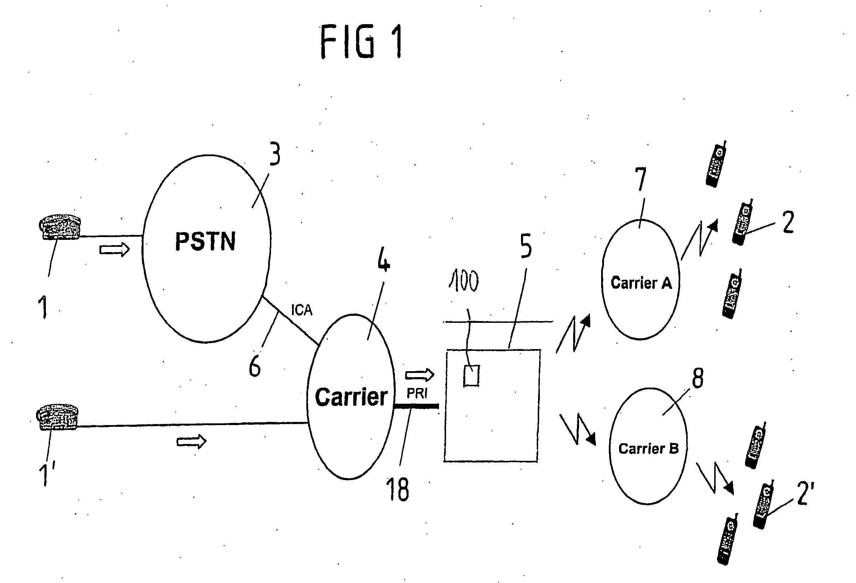

Die Figuren 1 bis 5 betreffen nicht die vorliegende Erfindung, sondern dienen der Erläuterung des technischen Hintergrundes der Erfindung.

Figur 1 zeigt eine Telekommunikationsanordnung, die den Aufbau einer Verbindung zwischen einem rufenden Kommunikationsgerät 1, 1' eines ersten Kommunikationsnetzes und einem gerufenen Kommunikationsnetz 2, 2' eines weiteren Kommunikationsnetzes ermöglicht. Bei dem Kommunikationsgerät 1, 1' handelt es sich im dargestellten Ausführungsbeispiel um ein Telekommunikations-Endgerät (TK-Endgerät), beispielsweise ein Telefon oder einen Computer mit einer ISDN-Karte.

Ein TK-Endgerät 1, in Figur 1 beispielhaft als Telefon dargestellt, ist in an sich bekannter Weise über eine Ortsvermittlungsstelle (nicht dargestellt) mit einem leitungsvermittelten Telekommunikationsnetz 3 (PSTN-Netz - public switched telephony network) verbunden ist. Bei dem Telekommunikationsnetz 3 handelt es sich insbesondere um das Netz des ehemaligen Monopolisten, in Deutschland die Deutsche Telekom AG. Das Telekommunikationsnetz 3 ist über einen so genannten Interconnect-Anschluss ICA 6 mit dem Telekommunikationsnetz 4 eines weiteren, alternativen Netzanbieters verbunden. Die Zusammenschaltung von Kommunikationsnetzen über Interconnect-Anschlüsse ist an sich bekannt, so dass hierauf nicht weiter eingegangen wird. Für die Zusammenschaltung hat der Betreiber des Netzes 4 eine Zusammenschaltungsgebühr (Interconnect-Gebühr) an den Betreiber des Netzes 3 zu zahlen. Alternativ ist ein Endgerät entsprechend dem unteren, in Figur 1 dargestellten Endgerät 1' direkt an das Netz 4 eines alternativen Netzanbieters angeschlossen.

An das Netz 4 ist des weiteren ein Mobilfunk-Gateway 5 angeschlossen. Die Anbindung des Mobilfunk-Gateways 5 an das Netz 4 erfolgt beispielsweise durch mindestens einen Primary-Rate-Interface (PRI) Anschluß 18 des diensteintegrierten Netzes ISDN, der 30 B-Datenkanäle und einen D-Signalisierungskanal bereitstellt (E1-Leitung). Alternativ kann das Mobilfunk-Gateway 5 grundsätzlich auch direkt an das Netz 3 des ehemaligen Monopolisten angeschlossen sein.

Das Mobilfunkgateway 5 stellt einen Netzzugang zu einer Mehrzahl von Mobilfunknetzen 7, 8 bereit. Hierbei handelt es sich beispielsweise in Deutschland um die Netze D1, D2 und E-Plus. In Figur 1 sind beispielhaft zwei Netze 7, 8 dargestellt. Ein gerufenes Kommunikationsgerät eines solchen Mobilfunknetzes 7, 8 ist beispielsweise ein Mobilfunktelefon 2, 2', das über eine SIM-Karte individualisiert und dem entsprechenden Mobilfunknetz 7, 8 zugeordnet ist. Es kann somit über das jeweilige Mobilfunknetz 7, 8 eine Telekommunikationsverbindung zu einem Mobilfunktelefon 2, 2' aufgebaut werden kann.

Sofern nun ein Endgerät 1, 1' des Festnetzes 3, 4 eine Telekommunikationsverbindung, insbesondere eine Telefonverbindung zu einem Endgerät 2, 2' eines Mobilfunknetzes 7, 8 aufbauen will, wird der Verbindungswunsch über das Telekommunikationsnetz 3, 4, an das das rufende Endgerät 1, 1' angeschlossen ist, und ggf. unter Zwischenschaltung eines weiteren Telekommunikationsnetzes 4 an den Mobilfunk-Gateway 5 geleitet.

Wie nachfolgend noch erläutert, sind in das Mobilfunk-Gateway 5 eine Vielzahl von Mobilstationen integriert, die einen Zugang des Mobilfunk-Gateways 5 zu den einzelnen Mobilfunknetzen 7, 8 ermöglichen. Das Mobilfunk-Gateway 5 erkennt anhand der Vorwahlnummer des eingehenden Rufes das Mobilfunknetz, das dem gerufenen Endgerät 2, 2' zugeordnet ist. Zum Aufbau einer Verbindung zwischen dem rufenden Endgerät 1, 1' und dem gerufenen Endgerät 2, 2' stellt es einen Nutzkanal des entsprechenden - oder eines wie nachfolgend beschrieben ausgewählten - Mobilfunknetzes 7, 8 bereit. Das Mobilfunkgateway 5 dient dabei selbst als Mobilfunkgerät und ruft über das Mobilfunknetz, in dem sich das gerufenen Endgerät 2, 2' befindet, dieses an.

Der Ruf wird dann in an sich bekannter Weise über eine Sende-Empfangsstation BTS (BTS - Base-Transceiver-Station), eine zugehörige Steuerungseinrichtung und weitere Netzinfrastruktur des Mobilfunknetzes 7, 8 an das gerufene Endgerät 2, 2' geleitet.

Alternativ wäre es auch möglich, eine Verbindung in ein Mobilfunknetz 7, 8 über einen Übergabepunkt des Telekommunikationsnetzes 3 bereitzustellen. Solche Übergabepunkte, die den Ruf dann in das Mobilfunknetz weiterleiten, sind an sich bekannt und finden auch Verwendung. Nachteilig sind auf diese Weise aufgebaute Telekommunikationsverbindungen jedoch mit hohen Gebühren verbunden, die der Betreiber des Telekommunikationsnetzes 3 für die Rufweiterleitung in das Mobilfunknetz erhebt, wobei gegebenenfalls zusätzlich Inerconnect-Gebühren hinzukommen. Eine gemäß Figur 1 aufgebaute Verbindung zwischen einem rufenden Endgerät 1, 1' im Festnetz und einem gerufenen Endgerät 2, 2' eines Mobilfunknetzes zeichnet sich dagegen durch eine wesentlich günstigere Preisstruktur aus, da die Mobilfunkverbindung zwischen dem Gateway 5 mit dem gerufenen Endgerät 2, 2' sowie die Festnetzverbindung zwischen dem rufenden Endgerät 1, 1' und dem Mobilfunkgateway 5 vergleichsweise kostengünstig sind. Statt der Kosten für einen Anruf von Festnetz zu Mobil fallen die Kosten eines Anrufs von Mobil zu Mobil plus geringen Zusatzkosten für die Festnetzverbindung an.

Das oben beschriebene Verfahren ist an sich bekannt. Erfindungsgemäß erfolgt eine Abwandlung, um den Fall mit zu berücksichtigen, dass ein Ruf zu einem Endgerät mit einer portierten Rufnummer aufgebaut werden soll, die aufgrund ihrer Vorwahl einem anderen Telekommunikationsnetz zugeordnet ist als dem aktuellen Telekommunikationsnetz des gerufenen Endgeräts.

Hierzu weist das Mobilfunkgateway 5 eine schematisch dargestellte Datenbank 100 auf, in der eine Vielzahl von portierten Rufnummern mit den dazugehörigen aktuellen Telekommunikationsnetzen bzw. deren Einwählnummern gespeichert ist. Diese Datenbank 100 wird fortlaufend aktualisiert und ist beispielsweise in Form einer Zuordnungsliste aufgebaut.

Bei Vorliegen eines Verbindungswunsches wird anhand der Datenbank 100 geprüft, ob es sich bei der Rufnummer des gerufenen Endgeräts 2, 2' um eine portierte Rufnummer handelt. Für diesen Fall wird das aktuelle Telekommunikationsnetz 7, 8 des gerufenen Endgeräts 2, 2' bestimmt. Die Verbindung wird nun direkt über das aktuelle Telekommunikationsnetz des gerufenen Endgeräts 2, 2' zu diesem terminiert. Dazu stellt das Mobilfunk-Gateways 5 einen Nutzkanal des entsprechenden, aktuellen Mobilfunknetzes 7, 8 bereit.

Beispielsweise lautet die portierte Rufnummer: 0172-11223344. Es handelt sich ursprünglich um eine Rufnummer des D2-Netzes. Der Nutzer hat nun den Provider gewechselt zu E-Plus und seine Rufnummer mitgenommen. In der Datenbank 100 des Mobilfunk-Gateways 5 ist dementsprechend die Information enthalten, dass der Nummer 0172-11223344 nun das E-Plus Netz mit der Einwählnummer 0177 zugeordnet ist. Das Mobilfunk-Gateways 5 stellt nun einen Nutzkanal des E-Plus Netzes für die Verbindung zur Verfügung. Es wird die Nummer 0177-0172-11223344 auf diesem Kanal des E-Plus Netzes ausgesendet, wobei die "0177" grundsätzlich auch weggelassen werden kann. Die Ruf wird im aktuellen E-Plus Netz dem Endgerät mit der Rufnummer 0172-11223344 zugeordnet und direkt im aktuellen Netz terminiert.

Alternativ kann beispielsweise der Fall vorliegen, dass das gerufene Endgerät einem Netz zugeordnet ist, zu dem das Mobilfunk-Gateway über keine Nutzkanäle bzw. SIM-Karten verfügt. Der Ruf wird dann bevorzugt zunächst an ein anderes, zwischengeschaltetes Netz eines dritten Netzprobiders weitergeleitet, von dem dann eine Terminierung der Verbindung zum aktuellen Netz erfolgt. Dabei wird der kostengünstigste Weg ausgewählt. In einer weiteren Alternative wird in einem solchen Fall der Verbindungsaufbau abgebrochen, bevorzugt allerdings erst nach einer diesbezüglichen Rückfrage bei dem rufenden Teilnehmer.

Auch können Signalisierungsinformationen an das rufende Endgerät 1 gesandt werden, etwa hinsichtlich der Tatsache, dass das gerufene Endgerät eine portierte Rufnummer besitzt, oder hinsichtlich der zu erwartenden Gebühren bei einer Terminierung der Verbindung.

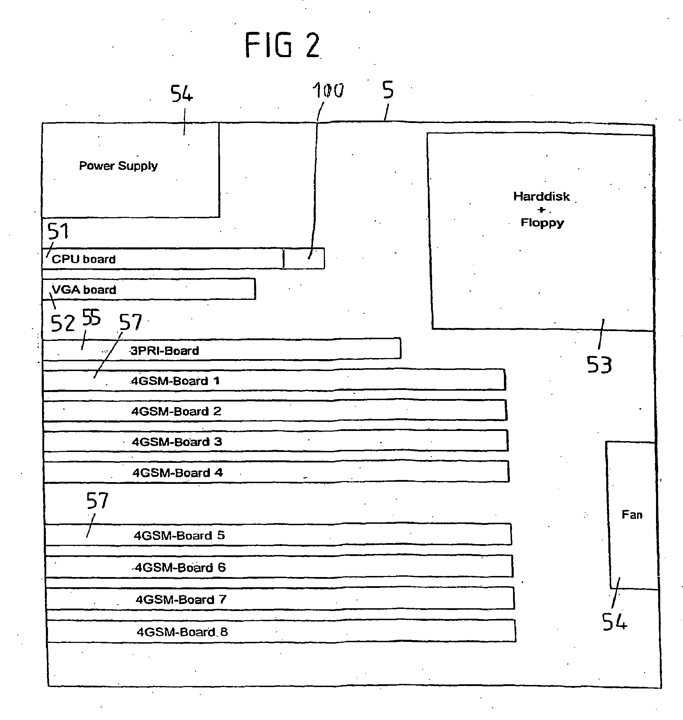

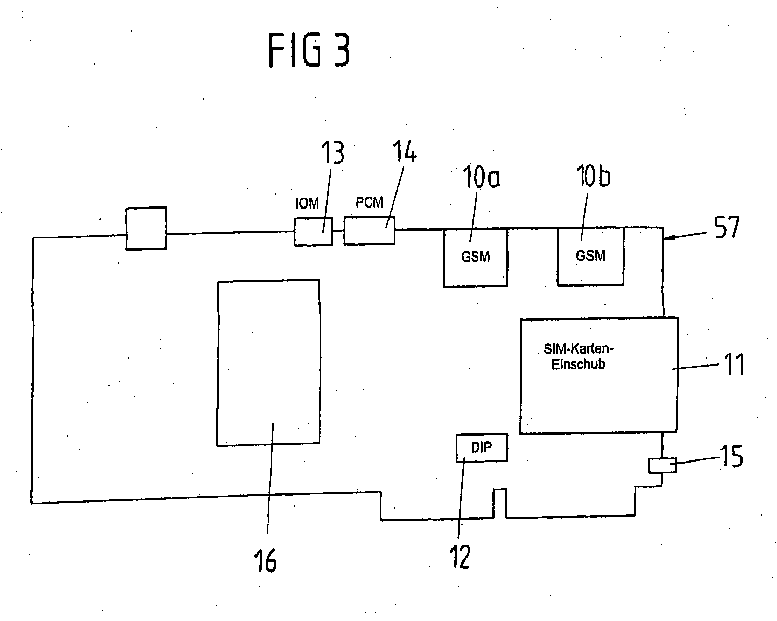

Die Figuren 2 und 3 zeigen im Einzelnen den Aufbau eines Mobilfunk-Gateways 5. Gemäß Figur 2 weist das Mobilfunk-Gateway eine zentrale Prozessoreinheit 51, eine Grafikkarte 52, Harddisk- und Floppy-Laufwerke 53, eine Stromversorgung 54 und einen Ventilator 55 auf. Eine Einsteckkarte 55 stellt drei PRI (E1)-Verbindungen zum Festnetz bereit, wobei auch eine andere Zahl von E1-Verbindungen vorgesehen sein kann. Die Einsteckkarte 55 stellt ein Koppelfeld zur Verfügung, über das eingehende Verbindungen jeweils einem Ausgang bzw. Nutzkanal zum Mobilfunknetz zugeordnet werden. Alternativ wird das Koppelnetz durch eine entsprechende Software der zentralen Prozessoreinheit 51 bereitgestellt.

Des weiteren weist das Mobilfunk-Gateway 5 eine Vielzahl von Einsteckkarten 57 für den Mobilfunk auf, die jeweils eine Vielzahl von Mobilstationen bereitstellen, im dargestellten Ausführungsbeispiel jeweils vier Mobilstationen. Gemäß dem vorherrschenden Standard im Mobilfunkbereich handelt es sich um GSM-Mobilstationen (GSM - Global System for Mobile Communication).

Die zentrale Prozessoreinheit 51 umfasst bevorzugt eine Datenbank, die eine Vielzahl von portierten Rufnummern mit den dazugehörigen aktuellen Telekommunikationsnetzen bzw. deren Einwählnummern enthält. Die Datenbank ist beispielsweise in einem gesonderten Speicherbaustein 100 enthalten. Alternativ ist die Datenbank 100 auf einer Festplatte oder einem anderen Speicherelement des Prozessors gespeichert. Auch kann es sich bei der Datenbank 100 um ein Datei mit Zuordnungen handeln, die vom Prozessor 51 bearbeitet wird. Beliebige Datenbankformate sind denkbar und beliebige Arten ihrer Speicherung.

Die Prozessoreinheit 51 prüft anhand der Datenbank 100 für jeden eingehenden Verbindungswunsch, ob eine portierte Rufnummer vorliegt. Für diesen Fall wird der eingehende Ruf dem aktuellen Netz des gerufenen Endgeräts zugeordnet und eine entsprechende GSM Mobilstation für den weiteren Verbindungsaufbau ausgewählt. Der Ruf kann somit direkt zu dem gerufenen Endgerät 2, 2' terminiert werden.

Eine Einsteckkarte 57 für den Mobilfunk ist in Figur 3 näher dargestellt. Die Einsteckkarte 57 weist auf der Vorder- und Rückseite jeweils zwei GSM-Module 10a, 10b auf, wobei die Figur 3 nur die auf der Oberseite dargestellten GSM-Module 10a, 10b zeigt. Jedes GSM-Modul 10a, 10b, das lediglich schematisch dargestellt ist, weist die Funktionalität eines Mobilgerätes eines Mobilfunknetzes auf. Jedem GSM-Modul 10, 10b sind mehrere SIM-Karten zogeordnet, wobei zu einem bestimmten Zeitpunkt immer nur eine SIM-Karte aktiviert ist. Die SIM-Karten sind auf einem SIM-Karteneinschub 11 angeordnet. Ein GSM-Modul 10a, 10b und eine SIM-Karte bilden jeweils eine Mobilstation eines Mobilfunknetzes aus.

Die Adresse der Einsteckkarte 57 ist über ein DIP-Feld 12 einstellbar. Ein Anschluss an ein internes Koppelfeld des Gateways 5 erfolgt über einen PCM-Bus 13 oder einen IOM-Bus 14. Eine Antenne 15 zum Aussenden oder Empfang von Funksignalen wird an der Rückseite der Karte angeschraubt. Die Einsteckkarte 57 verfügt des weiteren bevorzugt über einen eigenständigen Prozessor 16 mit Betriebssystem, der die einzelnen Module steuert. Alternativ erfolgt eine Steuerung ausschließlich über die zentrale prozessoreinheit.

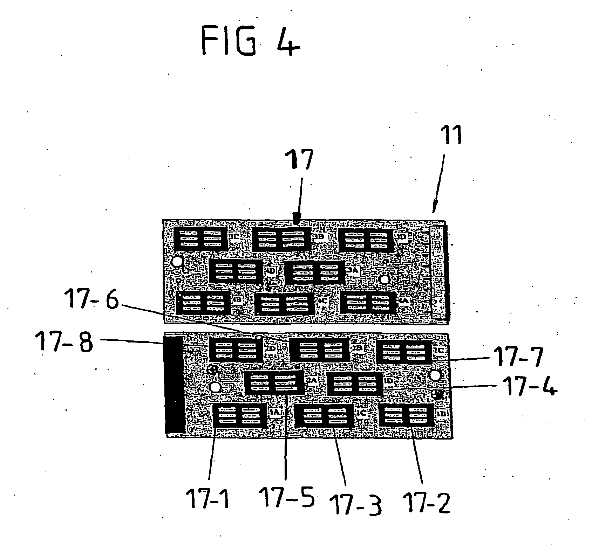

Figur 4 zeigt den SIM-Karteneinschub 11 der Figur 3 im Detail. Danach sind auf der Vorder- und Rückseite des Karteneinschubs 11 jeweils Aufnahmeplätze für acht SIM-Karten 17 vorgesehen, so dass insgesamt sechzehn SIM-Karten 17 vorgehalten werden können. Jedem GSM-Modul 10a, 10b sind dabei maximal vier SIM-Karten 17 zuordbar. Beispielsweise sind mit dem einen GSM-Modul 10a vier SIM-Karten 17-1, 17-2, 17-3, 17-4, dem GSM-Modul 10b vier Einsteckkarten 17-5, 17-6, 17-7, 17-8, etc. zugeordnet. Allerdings müssen nicht alle Aufnahmeplätze belegt sein.

Es verhält sich nun so, dass für eine konkrete Verbindung in ein Mobilfunknetz 7, 8 jeweils nur eine SIM-Karte 16 verwendet werden kann. Dabei wird jeweils eine solche SIM-Karte 16 aktiviert, die ein direktes Terminieren eines Rufs zu dem aktuellen Mobilfunknetz erlaubt.

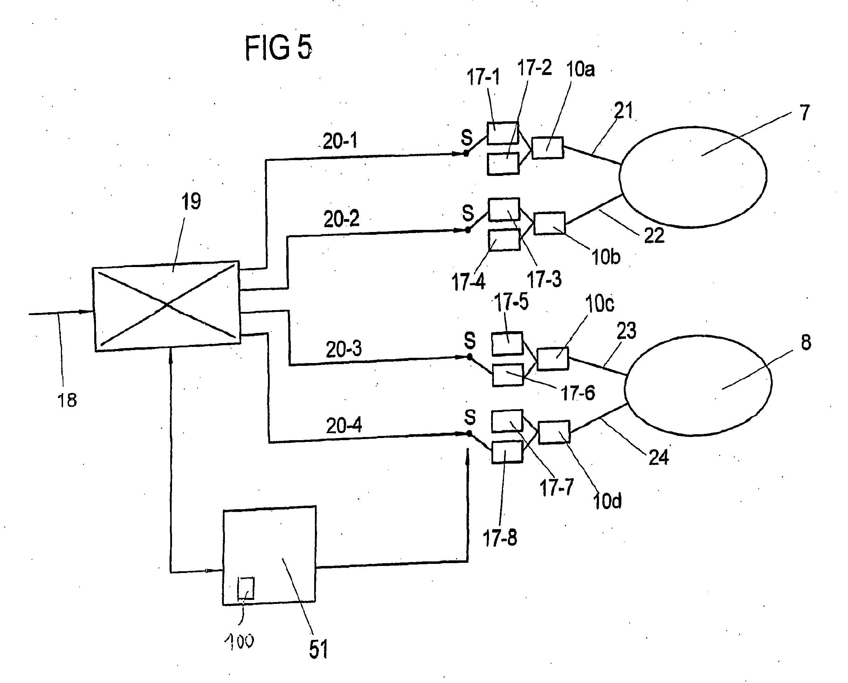

Figur 5 zeigt ein Koppelfeld 19, das beispielsweise in der Einsteckkarte 55 für eine PRI (E1)-Ankopplung gemäß Figur 2 implementiert ist. Das Koppelfeld 19 ist zum einen über einen PRI-Anschluß 18 gemäß Figur 1 an ein Festnetz angeschlossen. Die eingehenden, gemultiplexten Datenkanäle des PRI-Anschlusses 18 werden durch das Koppelnetz 19 auf eine Vielzahl von einzelnen Datenkanälen 20-1, 20-2, 20-3 und 20-4 verteilt. Dies wird über den zentralen Prozessor 51 des Gatesways 5 eine andere Steuereinheit gesteuert.

Zur einfacheren Darstellung sind in der Figur 5a nur vier GSM-Module 10a, 10b, 10c, 10d mit jeweils zwei SIM-Karten 17-1, 17-2, 17-3, 17-4, 17-5, 17-6, 17-7, 17-8 und zwei Mobilfunknetzen 7, 8 vorgesehen. Den Datenkanälen 20-1, 20-2, 20-3, 20-4 wird durch softwaregesteuerte Schalter S jeweils eine der SIM-Karten 17-1, 17-3, 17-6, 17-8 und damit ein bestimmtes Netz zugeordnet. Die Steuerung der Schalter S erfolgt mittels des zentralen Prozessors 51 oder einer anderen Steuereinheit, unter Berücksichtigung der Zuordnung der Datenbank 100, wie zuvor erläutert.
Über die GSM-Module 10a, 10b, 10c, 10d wird für jeden Datenkanal 20-1, 20-2, 20-3, 20-4 jeweils ein Nutzkanal 21, 22, 23, 24 für eine direkte Mobilfunkübertragung zu dem gerufenen Endgerät bereitgestellt. Die Zuordnung eines Nutzkanals 21, 22, 23, 24 zu einem Mobilfunknetz 17, 18 erfolgt über die gewählte SIM-Karte und entsprechend den Informationen der Datenbank 100.

In einem nicht dargestellten Ausführungsbeispiel der Erfindung ist die Datenbank in ein Mobilfunk-Endgerät (Handy) integriert.

Das Mobilfunk-Endgerät besitzt dabei über mindestens zwei SIM-Karten Zugang zu mindestens zwei Telekommunikationsnetzen. Eine Steuereinheit wählt zur Herstellung einer Verbindung zu einem gerufenen Endgerät diejenige Einsteckkarte aus, die dem aktuellen Mobilfunknetz des gerufenen Endgeräts ausweislich der Informationen der Datenbank zugeordnet ist, so dass die Verbindung in einfacher und kostengünstiger Weise direkt zu dem gerufenen Endgerät erfolgen kann.

Auch wenn das Mobilfunk-Endgerät über nur eine SIM-Karte verfügt und somit nicht Verbindungen zu verschiedenen Netzen aufbauen kann, ist die Integration der Datenbank sinnvoll. So können dem Nutzer die Tatsache angezeigt werden, dass ein Ruf zu einer portierten Rufnummer aufgebaut werden soll, und/oder Zusatzinformationen etwa zu den Kosten. Der Nutzer kann auf der Basis dieser Informationen entscheiden, ob die Verbindung überhaupt aufgebaut werden soll. Dabei kann vorgesehen sein, dass das Mobilfunk-Endgerät den Nutzer dazu auffordert, den Verbindungswunsch zu bestätigen. Alternativ kann versucht werden, die Verbindung unter Zwischenschaltung eines weiteren, möglichst kostengünstigen Netzes vorzunehmen, beispielsweise über eine Calling Card Platform mit DTMF Nachwahl.

## Patentansprüche

1. Verfahren zur Bereitstellung einer Telekommunikationsverbindung zwischen einem ersten, rufenden Endgerät und einem zweiten, gerufenen Endgerät, wobei das gerufene Endgerät eine portierte Rufnummer besitzt, die aufgrund ihrer Vorwahl einem anderen Telekommunikationsnetz zugeordnet ist als dem aktuellen Telekommunikationsnetz des gerufenen Endgeräts, wobei
- in einer Datenbank (100) eine Vielzahl von portierten Rufnummern mit den dazugehörigen aktuellen Telekommunikationsnetzen bzw. deren Einwählnummern gespeichert ist,
- vor oder während des Rufaufbaus anhand der Datenbank (100) geprüft wird, ob es sich bei der Rufnummer des gerufenen Endgeräts (2, 2') um eine portierte Rufnummer handelt,
- für diesen Fall das aktuelle Telekommunikationsnetz (7, 8) des gerufenen Endgeräts (2, 2') bestimmt,
- die Verbindung direkt über das aktuelle Telekommunikationsnetz (7, 8) des gerufenen Endgeräts (2, 2') zu diesem terminiert wird,
**dadurch gekennzeichnet, dass**
- die Datenbank in ein rufendes Mobilfunk-Endgerät integriert ist, das über mit einer Kennung versehenen Einsteckkarten, insbesondere SIM-Karten Zugang zu mindestens zwei Telekommunikationsnetzen besitzt, wobei das rufende Mobilfunk-Endgerät vor einem Verbindungsaufbau anhand der eigenen Datenbank prüft, ob es sich bei der Rufnummer des gerufenen Endgeräts um eine portierte Rufnummer handelt, für diesen Fall das aktuelle Telekommunikationsnetz des gerufenen Endgeräts bestimmt und einen Verbindungsaufbau unter Verwendung der Einsteckkarte vornimmt, die dem aktuellen Telekommunikationsnetz des gerufenen Endgeräts zugeordnet ist.

2. Verfahren nach Anspruch 1, **dadurch gekennzeichnet, dass** vor einem Terminieren der Verbindung dem rufenden Endgerät (1, 1') signalisiert wird, dass die Rufnummer des gerufenen Endgeräts (2, 2') eine portierte Rufnummer ist.

3. Verfahren nach Anspruch 2, **dadurch gekennzeichnet, dass** dem rufenden Endgerät (1, 1') weitere Zusatzinformationen, insbesondere der Kostentarif der zu dem gerufenen Endgerät aufzubauenden Verbindung mitgeteilt werden.

4. Verfahren nach Anspruch 1, **dadurch gekennzeichnet, dass** im Falle der Feststellung, dass die Rufnummer des gerufenen Endgeräts (2, 2') eine portierte Rufnummer ist, der Verbindungsaufbau automatisch abgebrochen wird.

5. Verfahren nach mindestens einem der Ansprüche 1 bis 3, **dadurch gekennzeichnet, dass** im Falle der Feststellung, dass die Rufnummer des gerufenen Endgeräts (2, 2') eine portierte Rufnummer ist, die Verbindung unter Zwischenschaltung eines weiteren Netzes zum gerufenen Endgerät terminiert wird.

6. Verfahren nach mindestens einem der vorangehenden Ansprüche, **dadurch gekennzeichnet, dass** die Datenbank (100) fortlaufend manuell oder automatisch aktualisiert wird.

7. Verfahren nach mindestens einem der vorangehenden Ansprüche, **dadurch gekennzeichnet, dass** die Datenbank (100) lediglich besonders häufig verwendete portierte Rufnummern enthält.

8. Mobilfunk-Endgerät zur Verwendung in dem Verfahren nach Anspruch 1, mit
- einer Datenbank (100), in der eine Vielzahl von portierten Rufnummern mit den dazugehörigen aktuellen Telekommunikationsnetzen bzw. deren Einwählnummern gespeichert ist,
- Mitteln (51), die anhand der Datenbank (100) prüfen, ob es sich bei der Rufnummer eines gerufenen Endgeräts um eine portierte Rufnummer handelt und für diesen Fall das aktuelle Telekommunikationsnetz des gerufenen Endgeräts bzw. dessen Einwahlnummer bestimmen, und
- Mitteln zur Herstellung einer Verbindung zu einem gerufenen Endgerät (2, 2') direkt über das aktuelle Telekommunikationsnetz (7, 8), wobei
- das Mobilfunk-Endgerät über mindestens zwei mit einer Kennung versehenen Einsteckkarten, insbesondere SIM-Karten, Zugang zu mindestens zwei Telekommunikationsnetzen besitzt, und die Mittel zur Herstellung einer Verbindung zu einem gerufenen Endgerät diejenige Einsteckkarte für einen Verbindungsaufbau auswählen, die dem Mobilfunknetz zugeordnet ist, dem ausweislich der Informationen der Datenbank auch das gerufene Endgerät aktuell zugeordnet ist.

9. Mobilfunk-Engerät nach Anspruch 8, **dadurch gekennzeichnet, dass** Mittel vorgesehen sind, die dem Nutzer die Tatsache, dass ein Ruf zu einer portierten Rufnummer aufgebaut werden soll, sowie ggf. Zusatzinformationen auf dem Display des Mobilfunk-Endgeräts anzeigen.

## Claims

1. Method for providing a telecommunications connection between a first calling terminal, and a second called terminal, wherein the called terminal has a ported telephone number which is assigned based on its prefix to a telecommunications network different from the actual telecommunications network of the called terminal, wherein
- in a data bank (100) a plurality of ported telephone numbers is stored with the associated current telecommunications networks or their dial-in numbers,
- before or during establishing the call it is checked by means of the data bank (100) whether the telephone number of the called terminal (2,2') is a ported telephone number,
- if this is the case the actual telecommunications network (7, 8) of the called terminal (2, 2') is determined and
- the connection is made directly via the current telecommunications network (7, 8) of the called terminal to terminate at the same,
**characterised in that**
- the data bank (100) is integrated in a calling mobile radio terminal which has access to at least two telecommunications networks via plug-in cards having an identifier, particularly SIM-cards, wherein the calling mobile radio terminal checks by means of its own data bank (100) before a connection establishment whether the telephone number of the called terminal is a ported telephone number, if this is the case determines the current telecommunications network of the called terminal and conducts a connection establishment using the plug-in card assigned to the current telecommunications network of the called terminal.

2. Method according to claim 1, **characterised in that** before completing the connection the calling terminal (1, 1') is signalled that the telephone number of the called terminal (2, 2') is a ported telephone number.

3. Method according to claim 2, **characterised in that** the calling terminal (1, 1') is informed of further additional information, more particularly the charging tariff of the connection which is to be established to the called terminal.

4. Method according to claim 1, **characterised in that** in the event of ascertaining that the telephone number of the called terminal (2, 2') is a ported telephone number the connection link is automatically broken off.

5. Method according to at least one of claims 1 to 3, **characterised in that** in the event of ascertaining that the telephone number of the called terminal (2, 2') is a ported telephone number the connection is completed by switching in a further network to the called terminal.

6. Method according to at least one of the preceding claims, **characterised in that** the data bank (100) is continuously updated manually or automatically.

7. Method according to at least one of the preceding claims, **characterised in that** the data bank (100) contains only ported telephone numbers which are used particularly frequently.

8. Mobile radio terminal for use in the method according to claim 1, comprising
- a data bank (100) in which a plurality of ported telephone numbers is stored with the associated current telecommunications networks or their dial-in numbers,
- means (51) which check by means of the data bank (100) whether the telephone number of a called terminal is a ported telephone number and if this is the case determine the actual telecommunications network of the called terminal and the dial-in number of the same, respectively, and
- means for establishing a connection to a called terminal (2, 2') directly via the current telecommunications network (7, 8), wherein
- the mobile radio terminal has access to at least two telecommunications networks via plug-in cards having an identifier, particularly SIM-cards, and the means for establishing a connection to a called terminal select the plug-in card which is assigned to the mobile radio network to which also the called terminal is currently assigned according to the information of the data bank.

9. Mobile radio terminal according to claim 8, **characterised in that** means are provided which show on the display of the mobile radio terminal the fact to the user that a call to a ported telephone number shall be established as well as eventually additional information.

## Revendications

1. Procédé pour établir une connexion de télécommunication entre un premier terminal appelant et un second terminal appelé, le terminal appelé possédant un numéro d'appel porté qui est attribué en raison de sa présélection à un autre réseau de télécommunication que le réseau de télécommunication actuel du terminal appelé, dans lequel
- une multitude de numéros d'appel portés est enregistrée dans une base de données (100) avec les réseaux de télécommunication actuels correspondants et/ou leurs numéros de sélection,
- avant ou pendant l'établissement de l'appel au moyen de la base de données (100), il est vérifié s'il s'agit d'un numéro d'appel porté pour le numéro d'appel du terminal appelé (2, 2'),
- dans ce cas, le réseau de télécommunication actuel (7, 8) du terminal appelé (2, 2') est déterminé,
- la connexion est établie avec le terminal appelé (2, 2') directement par l'intermédiaire du réseau de télécommunication actuel (7, 8) de celui-ci,
**caractérisé en ce que**
la base de données (100) est intégrée dans un terminal de radiocommunication mobile (5) qui possède un accès à au moins deux réseaux de télécommunication par le biais de cartes enfichables dotées d'une identification, en particulier des cartes SIM, moyennant quoi, avant un établissement de connexion, le terminal de radiocommunication mobile appelant vérifie à l'aide de sa propre base de données s'il s'agit d'un numéro d'appel porté pour le numéro d'appel du terminal appelé ; dans ce cas, il détermine le réseau de télécommunication actuel du terminal appelé et il réalise un établissement de connexion en employant la carte enfichable qui est attribuée au réseau de télécommunication actuel du terminal appelé.

2. Procédé selon la revendication 1, **caractérisé en ce que,** avant une fin de connexion, le terminal appelant (1, 1') est informé que le numéro d'appel du terminal appelé (2, 2') est un numéro d'appel porté.

3. Procédé selon la revendication 2, **caractérisé en ce que** d'autres informations supplémentaires, en particulier le coût de la connexion devant être établie vers le terminal appelé, sont communiquées au terminal appelant (1, 1').

4. Procédé selon la revendication 1, **caractérisé en ce qu'**au cas où il est constaté que le numéro d'appel du terminal appelé (2, 2') est un numéro d'appel porté, l'établissement de la connexion est automatiquement interrompu.

5. Procédé selon au moins une des revendications 1 à 3, **caractérisé en ce qu'**au cas où il est constaté que le numéro d'appel du terminal appelé (2, 2') est un numéro d'appel porté, la connexion est établie avec le terminal appelé en intercalant un autre réseau.

6. Procédé selon au moins une des revendications précédentes, **caractérisé en ce que** la base de données (100) est actualisée en permanence manuellement ou automatiquement.

7. Procédé selon au moins une des revendications précédentes, **caractérisé en ce que** la base de données (100) contient uniquement des numéros d'appel portés utilisés particulièrement fréquemment.

8. Terminal de radiocommunication mobile destiné à l'utilisation dans le procédé selon la revendication 1, doté
- d'une base de données (100) dans laquelle est enregistrée une multitude de numéros d'appel portés avec les réseaux de télécommunication actuels correspondants et/ou leurs numéros de sélection,
- de moyens (51) qui vérifient au moyen de la base de données (100) s'il s'agit d'un numéro d'appel porté dans le cas du numéro d'appel d'un terminal appelé, et déterminent dans ce cas le réseau de télécommunication actuel du terminal appelé et/ou son numéro de sélection, et
- des moyens pour établir une connexion avec un terminal appelé (2, 2') directement par l'intermédiaire du réseau de télécommunication actuel (7, 8),
le terminal de radiocommunication mobile possédant par le biais d'au moins deux cartes enfichables dotées d'une identification, en particulier des cartes SIM, un accès à au moins deux réseaux de télécommunication, et les moyens pour établir une connexion à un terminal appelé sélectionnant pour un établissement de connexion la carte enfichable qui est attribuée au réseau de télécommunication mobile auquel, d'après les informations de la base de données, le terminal appelé est aussi actuellement attribué.

9. Terminal de radiocommunication mobile selon la revendication 8, **caractérisé en ce que** sont prévus des moyens qui indiquent à l'utilisateur, sur l'afficheur du terminal de radiocommunication mobile, le fait qu'un appel doit être établi à un numéro d'appel porté, ainsi que des informations supplémentaires le cas échéant.
